# EUROPÄISCHE PATENTSCHRIFT

(11) **EP 2 596 094 B1**
(45) Veröffentlichungstag und Bekanntmachung des Hinweises auf die Patenterteilung: **19.11.2014**
(21) Anmeldenummer: 11732482.2
(22) Anmeldetag: 18.07.2011
(51) Int. Cl.: C12G 1/00, C12G 1/08, C12C 7/175

(54) **VERFAHREN ZUR KLÄRUNG EINES WEIN-GELÄGERS**
METHOD FOR CLARIFYING A WINE SEDIMENT
PROCÉDÉ DE CLARIFICATION D'UN DÉPÔT DE VIN

(30) Priorität: 20.07.2010 DE 102010027598
(43) Veröffentlichungstag der Anmeldung: 29.05.2013
(73) Patentinhaber: GEA Mechanical Equipment GmbH, 59302 Oelde (DE)
(72) Erfinder: SCHAUZ, Frank, 59302 Oelde (DE); PECORONI, Stefan, 59302 Oelde (DE)
(74) Vertreter: Specht, Peter
(86) Internationale Anmeldenummer: PCT/EP2011/062216
(87) Internationale Veröffentlichungsnummer: WO 2012/010543

(56) Entgegenhaltungen:
- WO-A1-01/57177
- WO-A1-86/05511
- WO-A1-97/25409
- DE-A1- 3 040 618
- DE-C1- 19 707 332
- US-A1- 2010 009 029

## Beschreibung

Die Erfindung betrifft ein Verfahren zur Klärung eines Gelägers nach dem Oberbegriff des Anspruchs 1.

Bei der Herstellung von Wein fallen während des Bearbeitungsprozesses im Anschluss an die Gärung große Mengen an Gelägern an, welches neben Schwebstoffen und Bestandteilen des Mostes auch viel Hefe enthält. Als Geläger werden Trubstoffe bzw. Schwebstoffe, hauptsächlich Hefe, bezeichnet, die sich insbesondere nach der Gärung von Wein als Bodensatz im Fass oder Tank absetzen.

Im Sinne dieser Anmeldung ist ein Geläger der beim ersten Abstich anfallende, vorwiegend aus Hefe bestehende Trub (Hefegeläger), dies können lebende oder tote Hefezellen sein. Daneben besteht die Festsubstanz noch überwiegend aus Mikroorganismen, Weinstein, Calciumtartrat, Eiweiß, Farbstoffe und Anteilen der im Most enthaltenen Trubstoffe (Beerenhäute etc.). Die Menge des sich absetzenden Hefetrubs schwankt etwa zwischen 2-5 % des vergorenen Mostes. Die äußeren Schichten bestehen meist aus schmutzigbraunen, schleimigen Stoffen, während die mittlere, hellgelb gefärbte Schicht aus reiner Hefe besteht und dementsprechend als Kernhefe bezeichnet wird. Da der Trub relativ weich ist, lässt er sich nur schlecht mit einem Klärvorgang entfernen.

Der Wein wird durch einen Abstich vom Geläger getrennt. Bei industrieller Produktion wird der Wein meist mit Kieselgur gefiltert, ohne auf ein Absetzen warten zu müssen. Während das Getränk verschiedene Bearbeitungsstufen durchläuft, wurden das im Gärtank verbleibende Geläger als problematisches Abfallprodukt angesehen.

Geläger können nicht durch die Kanalisation entsorgt werden, da sie noch hohe Anteile an Wein enthalten, welche insbesondere die biologische Stufe in Kläranlagen zum Umkippen bringen können. Durch Klären kann ein Geläger jedoch in deponiefähigen Feststoff bzw. Trub und sogenannten Hefewein verarbeitet werden.

Es ist somit die Aufgabe der vorliegenden Erfindung, eine Optimierung dieses Verfahrens zu erreichen.

Die vorliegende Erfindung löst diese Aufgabe durch ein Verfahren mit den Merkmalen des Anspruchs 1.

Danach erfolgt vor der zentrifugalen Klärung oder während der zentrifugalen Verarbeitung ein Schönen des Gelägers durch Zugabe zumindest eines Schönungsmittels.

Unter einem Schönen ist in diesem Zusammenhang die Zugabe von verschiedenen Stoffen (Schönungsmittel) zum Geläger zu verstehen, wobei durch chemische Reaktionen und/oder Adsorption unerwünschte Schwebstoffe durch die Stoffe gebunden werden und mit ihnen zu Boden sinken bzw. als schwere Bestandteile zentrifugal abgeschieden werden können.

Durch das Schönen kann eine bessere Klärung der Flüssigkeitsphase erreicht werden, so dass durch das optimierte Verfahren eine bessere Weinqualität erreicht werden kann.

Vorteilhafte Ausgestaltungen des Verfahrens ist Gegenstand der Unteransprüche.

Durch kontinuierliches Schönen kann die Flüssigkeitsphase ohne zeitliche Vorgabe vorteilhaft bearbeitet werden. Der durch das Schönen zusätzlich ausgefallene Trub, der sogenannte Schönungstrub kann unkompliziert während des zentrifugalen Klärens von der Flüssigkeit abgetrennt werden.

Das Schönen kann besonders vorteilhaft durch eine Gelatine-Kieselsol-Schönung erfolgen.

Um einer Überschönung entgegenzuwirken, ist es von Vorteil, wenn zunächst die Zugabe von Gelatine und anschließend die Zugabe von Kieselsol erfolgt.

Alternativ zu Gelatine/Kieselsol können auch andere Schönungsmittel eingesetzt werden, so z.B. Bentonit, Chitosan, Kasein, Hausenblase oder andere tierische Proteine, Gummi arabicum, Polyvinylpyrrolidon (PVPP), Tannine oder andere Polyphenole und/oder Polyamid.

Es ist von Vorteil, wenn nach dem Schönen ein Ermitteln des Trubgehaltes in der Flüssigkeitsphase erfolgt.

Ein Mess- und Steuergerät kann beispielsweise im Anschluss anhand eines vorgegebenen Sollwertes entscheiden, ob der Trubgehalt der Flüssigkeitsphase den Vorgaben beispielsweise für Hefewein entspricht. So kann beispielsweise anhand des ermittelten Trubgehaltes ein Dosieren des Schönungsmittels erfolgen.

In einer vorteilhaften ersten Ausführungsvariante des Verfahrens kann das Schönen in einer Mischsektion vor dem zentrifugalen Klären in der Vollmantel-Schneckenzentrifuge erfolgen, wobei das Schönen in dieser Variante getrennt von der eigentlichen Klärung in einem nachfolgenden Klärungsschritt erfolgt, wodurch bei besonders schwer klärbaren Gelägertypen eine weitergehende Optimierung der Klärung der flüssigen Phase erfolgt.

In einer alternativen zweiten Ausführungsvariante des Verfahrens kann das Schönen durch Zuleitung des Schönungsmittels in die Vollmantel-Schneckenzentrifuge während des zentrifugalen Klärens erfolgen. Dadurch kann eine kompaktere Bauweise der Anlage, mit welcher das erfindungsgemäße Verfahren durchgeführt wird, erreicht werden.

In einer alternativen dritten Ausführungsvariante kann das Schönen durch Zuleitung des Schönungsmittels in den Ablauf der Vollmantel-Schneckenzentrifuge gegeben werden. Dadurch kann eine Qualitätsverbesserung bei schwer klärbaren Gelägertypen erreicht werden.

Die verschiedenen Ausführungsvarianten sind, beispielsweise bei schwer klärbaren Gelägertypen, auch vorteilhaft miteinander kombinierbar, so nach Art des Verfahrens wobei das Schönen bei einer Produkttemperatur von 8-25 °C durchgeführt wird.

Die Temperatur der Gelatine / Kieselsollösung liegt vorzugsweise bei 35 - 45 °C.

Vorzugsweise wird eine Vollmantel-Schneckenzentrifuge eingesetzt, deren g-Zahl (maximale Zentripetalbeschleunigung des Produktes in der Trommel als Vielfaches der Erdbeschleunigung) größer als 2700 ist. Hier wirkt sich die Erfindung vorteilhaft aus.

Vorzugsweise liegt die Einlaufposition des Verteilers im zylindrischen Bereich der Trommel, näher zum konischen Bereich hin als zum Flüssigkeitsaustrag hin, aber nicht im konischen Bereich der Trommel. Auch dies ist für die Wirkung der Erfindung grundsätzlich vorteilhaft

Vorzugsweise wird zudem eine Tiefteichvariante bzw. Bauweise der Trommel verwendet, d.h. der Trommeldurchmesser ist mehr als doppelt so groß wie der Radius, auf dem die Feststoffaustragsöffnungen liegen. Durch den derart erreichbaren langen Sedimentationsweg lässt sich die Wirkung der Erfindung weiter erhöhen.

Nachfolgend sind mehrere Varianten des erfindungsgemäßen Verfahrens anhand der Figuren 1-4 näher erläutert.

Es zeigen:
- Fig.1: eine schematische Skizze einer Anlage mit einer Vollmantel-Schneckenzentrifuge und einer vorgelagerten Mischstufe für ein Verfahren zur Klärung von Geläger;
- Fig.2: Diagramm zu den einzelnen Verfahrensschritten in der Anlage der Fig.1;
- Fig.3: schematische Skizze einer Anlage mit einer Vollmantel-Schneckenzentrifuge mit einer Zuleitung für Schönungsmittel;
- Fig.4: Diagramm zu den einzelnen Verfahrensschritten in der Anlage der Fig.3.

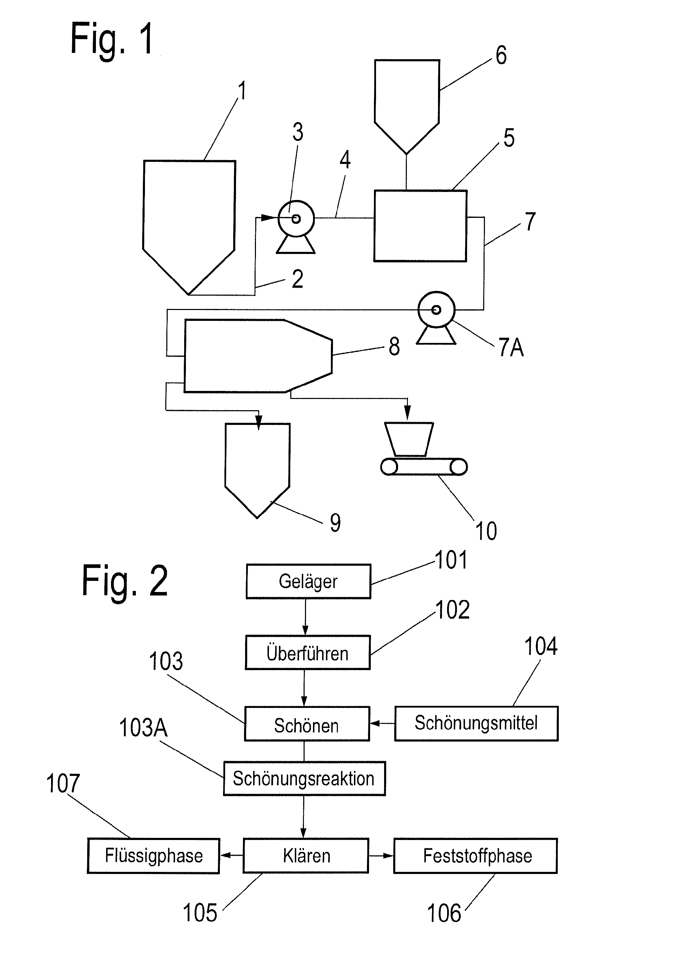

Fig.1 zeigt den schematischen Aufbau einer Anlage oder eine Bearbeitungsstufe zur Durchführung eines erfindungsgemäßen Verfahrens zur Klärung von Gelägern.

Geläger können dieser Anlage beispielsweise gesammelt zugeführt und getrennt vom Verarbeitungsprozess der Weinbearbeitung behandelt werden. Sie können aber beispielsweise auch direkt aus einem Gärtank abgeführt und in einer zusätzlichen Bearbeitungsstufe aufgearbeitet werden.

Der Anlage vorgeschaltet ist ein Speisetank 1, der hier eine bevorzugte im oberen Teil zylindrische und im unteren Teil konische Form aufweist.

In den Speisetank wird das zu verarbeitende Geläger gefüllt, beispielsweise Trub aus Hefe, festen Mostbestandteilen, ausgefallenen polymeren Naturstoffen und Weinstein, welche zusammen mit den verbliebenen flüssigen Bestandteilen eine Suspension bilden. Dieses Geläger wird beispielsweise aus einem Gärtank (hier nicht dargestellt) nach dem Abstich des Weins abgeführt oder von kleineren Kellereien separat angeliefert und in den Speisetank abgefüllt.

Der Speisetank 1 ist hier über eine Leitung 2 im unteren Bereich des Speisetanks, vorzugsweise am untersten Punkt des unten konischen Speisetank 1 ansetzende - Leitung 2 mit einer Pumpe 3 verbunden. Durch diese Pumpe wird das Geläger aus dem Speisetank abgesaugt und über die Leitung 4 in eine Mischsektion 5 weitergeleitet.

In der Mischsektion 5 erfolgt ein Vermischen des Gelägers mit einem Schönungsmittel, welches der Mischsektion 5 aus einem Vorratstank 6 zugeführt wird, wobei der Schönungsprozess an anderer Stelle näher erörtert wird. Im Anschluss an das Beimischen des Schönungsmittels zum Geläger, wird dieses Gemisch über die Leitung 7 und eine optionale Pumpe 7A in eine Vollmantel-Schneckenzentrifuge 8 überführt. Durch die optionale Pumpe 7A kann die Strömungsgeschwindigkeit des Geläger/Schönungsmittel-Gemisches vorteilhaft reguliert werden.

In der Vollmantel-Schneckenzentriuge 8 erfolgt eine Klärung des Gelägers in eine geklärte Flüssigkeitsphase welche beispielsweise in einen Lagertank 9 überführt wird und in eine Feststoffphase inklusive dem abgetrennten Schönungsmittel, welche beispielsweise zu einer Deponie über ein Förderband 10 abgeführt wird.

Alternativ zum Lagertank 9 kann die geklärte Flüssigkeitsphase auch weiteren Prozess-Schritten unterzogen werden.

Fig. 2 zeigt ein Ausführungsbeispiel für einen möglichen Verlauf eines erfindungsgemäßen Verfahrens zur Klärung von Gelägern in einer Anlage gemäß Fig.1.

Zunächst wird das Geläger 101 direkt aus einem Gärprozess oder aus dem Speisetank 1 der Anlage zugeführt.

Anschließend erfolgt ein Überführen 102 des Gelägers in die Mischsektion 5 mit Hilfe der Pumpe 3. Hier erfolgt das sogenannte Schönen 103, also das Beimischen von einem oder mehreren Schönungsmitteln 104 zum Geläger 101.

Dabei erfolgt durch den Kontakt des Schönungsmittels mit den Inhaltsstoffen des Gelägers die gewünschte chemische Reaktion und/oder der physikalische Effekt.

Im Anschluss daran wird das Geläger/Schönungsmittelgemisch in eine Vollmantel-Schneckenzentrifuge geleitet. Hier erfolgt eine Verarbeitung des Gelägers in eine deponiefähige Feststoffphase 106 und eine Flüssigkeitsphase bzw. Flüssigphase 107 durch zentrifugales Klären 105.

Schließlich werden die beiden Phasen getrennt abgeführt.

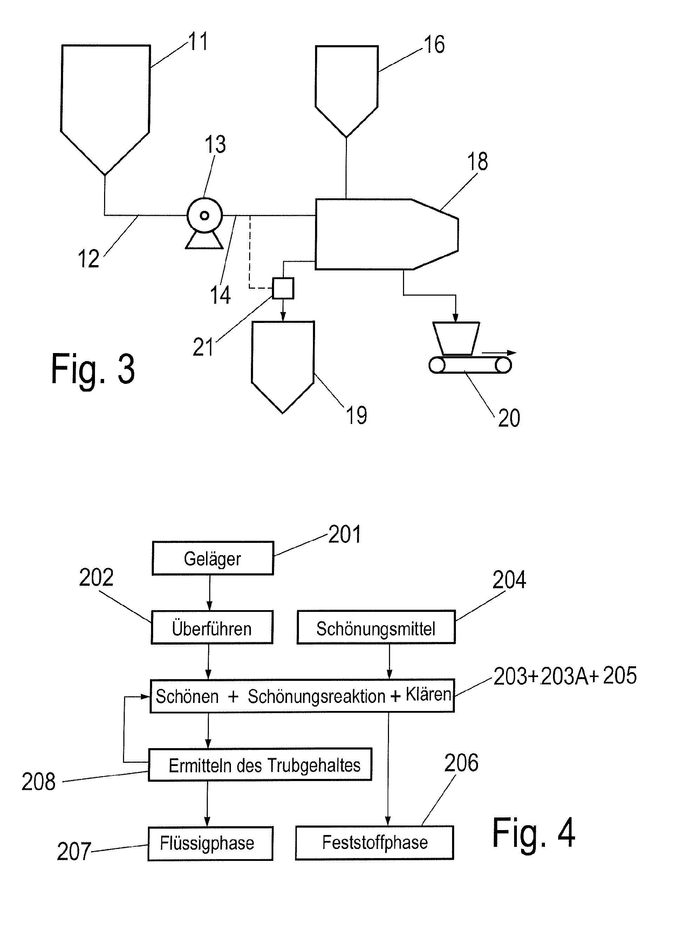

Fig. 3 zeigt den Aufbau einer zweiten besonders bevorzugten Anlage zur Klärung von Gelägern.

Das Geläger wird von einem Speisetank 11 über Leitungen 12 und 14 und eine Pumpe 13 direkt in eine Vollmantel-Schneckenzentrifuge 18 geleitet. Die Vollmantel-Schneckenzentrifuge 18 ist mit einem Vorratstank 16 für Schönungsmittel über eine Zuleitung verbunden.

Von diesem Vorratstank 16 kann Schönungsmittel direkt in die Vollmantel-Schneckenzentrifuge 18 eingeleitet werden. Die Vollmantel-Schneckenzentrifuge 18 übernimmt sowohl die Aufgaben des Mischens des Schönungsmittels mit dem Geläger, als auch die Klärung des Gelägers in Feststoffphase, inklusive der Abtrennung des Schönungsmittels, und Flüssigkeitsphase. Die Flüssigkeitsphase kann durch weitere Prozess-Schritte zusätzlich aufgearbeitet werden oder als sogenannter Hefewein im Lagertank 19 gesammelt werden. Die Feststoffphase kann beispielsweise über ein Transportband 20 auf eine Deponie überführt werden.

Die Zugabe an Schönungsmittel kann vorteilhaft durch Ermittlung des Trubgehaltes der geklärten Flüssigkeitsphase mittels einer Mess- und Steuereinheit 21, beispielsweise mit einem Trübungsmessgerät, erfolgen. Diese kann, im Fall eines zu hohen Trubgehaltes, die Flüssigkeitsphase in die Vollmantel-Schneckenzentrifuge zurückführen und/oder - hier nicht dargestellt - die Zugabe an Schönungsmittel erhöhen oder drosseln. Dabei kann die Zugabe an Schönungsmittel besonders vorteilhaft über eine Dosierlanze erfolgen.

Eine weitere Möglichkeit zur Einstellung der optimalen Konzentration an Schönungsmittel kann durch Ermittlung des Trubgehaltes der geklärten Flussigkeitsphase, vorzugsweise durch eine optische Messapparatur. und durch anschließende Regulierung des Gelägerstroms in die Vollmantel-Schneckenzentrifuge erfolgen.

In Fig. 4 ist der schematische Ablauf einer zweiten Ausführungsvariante für ein erfindungsgemäßes Verfahren mit einer Anlage gemäß Fig.3 dargestellt.

Zunächst erfolgt ein Überführen 202 des Gelägers 201, beispielsweise vom Speisetank 11 direkt in die Vollmantel-Schneckenzentrifuge 18.

In der Vollmantel-Schneckenzentrifuge 18 erfolgen sowohl das Schönen 203, also die Zufuhr von Schönungsmittel 204, die Schönungsreaktion 203A des Schönungsmittels mit den Feststoffen, als auch das zentrifugale Klären 205 des Gelägers in eine Feststoffphase, inklusive dem abgetrennten Schönungsmittel, und eine Flüssigkeitsphase.

Im Anschluss erfolgt das Abführen der Feststoffphase 206 und der Flüssigkeitsphase 207 aus der Vollmantel-Schneckenzentrifuge 18.

Zwischen dem Klären 205 und Abführen der Flüssigkeitsphase 207 kann ein optional ein Ermitteln des Trubgehaltes 208 erfolgen.

In einer nicht dargestellten alternativen oder zusätzlichen Ausführungsvariante kann die Zufuhr von Schönungsmittel in den Verteilerabschnitt oder, besonders vorteilhaft, in einem Bereich nach dem Verteiler zwischen Verteiler und Flüssigkeitsaustrag in die Vollmantel-Schneckenzentrifuge erfolgen.

Dabei kann der Verteiler mit Mischelementen ausgestattet sein, um eine gute Vermischung des Schönungsmittels mit dem Geläger zu ermöglichen.

Besonders vorteilhaft ist die Einleitung des Schönungsmittels hinter dem Verteiler, da schwerere Feststoffe bereits abgeschieden wurden. Dadurch erfolgt im Verteilerbereich eine teilweise Vorklärung, so dass weniger Schönungsmittel für die Klärung der Flüssigphase des Gelägers nach dem Verteiler in der Vollmantel-Schneckenzentrifuge benötigt wird und zugleich eine optimale Durchmischung gewährleistet ist.

Bei dieser Variante der Klärung wird in einer besonders vorteilhaften Ausführungsform eine Vollmantel-Schneckenzentrifuge mit einer Schnecke verwendet, welche durchmischende Segmente aufweist. Derartige Schnecken mit durchmischenden Segmenten im Verteilerabschnitt sind u.a. aus der WO 02/38278 und der DE 10 2005 061 461 A1 bekannt.

Das Schönungsmittel besteht vorzugsweise aus einer Kombination aus Gelatine und Kieselsol.

Nachfolgend wird der Verfahrensschritt des Schönens beispielhaft anhand der besonders bevorzugten Gelatine-Kieselsol-Schönung von Wein näher erörtert.

Dabei entsteht Gelatine üblicherweise durch Hydrolyse des Kollagens von Häuten, Knochen und Schwarten größerer Schlachttiere und ist ein Eiweißstoff. Gelatine ist ein Gemisch aus teilhydrolysierten Proteinen und Peptiden, α-Spiralen, β-Peptiden und-Spiralen, γ- Peptiden und -Spiralen und Kollagenbruchstücken. Säurehydrolysierte Gelatine ist in Wein stark positiv geladen, basisch hydrolysierte Gelatine sind allerdings nur schwach in Wein geladen. Die Gelatine bewirkt eine Abnahme sowohl an kondensierten Polyphenolen als auch an Gerbstoffen. Weiterhin bewirkt sie eine Farbaufhellung, wobei der Verlust an den eigentlichen Farbstoffen (den Anthocyanen) nur wenige Prozent beträgt. Schließlich können durch Gelatine auch Geruchs- und Geschmacksfehler zumindest teilweise aus den Wein entfernt werden.

Kieselsole sind wässrige, kolloidale Kieselsäurelösungen. Sie enthalten unvernetzte, kugelförmige Partikel aus amorpher Kieselsäure.

Die Ermittlung der optimalen Konzentration an Schönungsmittel kann durch Schönungsvorversuche in Standzylindern ermittelt werden, wobei die Beurteilung der Klärung beispielsweise visuell vorgenommen werden kann.

Die Schönung, also die Klärung der Geläger durch Gelatine, erfolgt durch Entladung unterschiedlich geladener Teilchen. Die unerwünschten Kolloide im Geläger (aus Most, Hefe oder chemische Veränderungen des Weins während der Gärung) sind aufgrund der Ionisation der Säuregruppe im Allgemeinen negativ geladen, wohingegen Gelatine-Teilchen in Wein positiv geladen sind. Durch die gegensätzliche Ladung kommt es zu einer Aneinanderlagerung der Trubstoffe und des Schönungsmittels, wodurch eine Agglomeration oder Aggregation mit nachfolgender Ausflockung erreicht wird.

Besonders vorteilhaft kann zunächst durch Zugabe der Gelatine und anschließend die der Kieselsäure vorgenommen werden. Dabei werden zunächst die Weinkolloide ausgefällt und der Gelatineüberschuss anschließend durch Fällung nach Zugabe von Kieselsol aus der Lösung entfernt.

Alternativ kann zunächst Kieselsol und anschließend Gelatine zugegeben werden. Alternativ oder zusätzlich zur beschriebenen Gelatineschönung können auch andere Schönungsprozesse in der Mischsektion erfolgen.

Bei Geläger besteht in der Regel eine untere Grenze für den Feststoffgehalt von mindestens 30 Volumenprozent, vorzugsweise 40-60 Volumenprozent, wobei der Feststoff typischerweise einen Anteil von 10 -12 % schwer abzuscheidenden eher weichen Feststoffen enthält.

In einem solchen Geläger mit beispielsweise 10-12 Volumenprozent weichen Feststoffen können zunächst vorzugsweise 5-15 g/hL, beispielsweise 10g/hL (Hektoliter) Gelatine und 25-75 ml/hL, beispielsweise 50 ml/hL Kieselsol zugegeben werden.

Nach dem Schönen und Klären enthält eine derart geklärte Flüssigphase beispielsweise etwa 0,2 Volumenprozent an weichen Feststoffen.

Die erfindungsgemäße Aufarbeitung von Gelägern wird vorzugsweise als kontinuierlicher Prozess ausgestaltet.

In einem weiteren nicht dargestelltes Ausführungsbeispiel kann die Zuleitung von Schönungsmittel derart erfolgen, dass das Schönungsmittel in eine Leitung, welche das Geläger in die Vollmantelschneckenzentrifuge leitet, zugesetzt wird.

Die Leitung kann das Zulaufrohr der Vollmantel-Schneckenzentrifuge sein. Diese Leitung weist vorzugsweise Mittel zum Mischen des Schönungsmittels mit dem Geläger auf.

Zusätzlich oder alternativ erfolgt die Zugabe des Schönungsmittels in einer weiteren bevorzugten Ausführungsvariante im Bereich eines Verteilers der Vollmantel-Schneckenzentrifuge. Zur vorteilhaften Intensivierung des Mischvorganges sind am oder im Verteiler Einbauten, beispielsweise Vorsprünge, angeordnet bzw. ausgebildet, so dass eine nahezu homogene Verteilung des Schönungsmittels im Geläger erreicht wird.

Zusätzlich zum Zulaufrohr kann die Zuleitung auch durch eine separate zweite Zuleitung in den Verteilerbereich der Vollmantel-Schneckenzentrifuge erfolgen.

Bei einem Versuch wurde mit einer Dosierung von Gelatine (5 - 8 g/hl) mittels eines Dosierrohrs im Einlaufrohr, also mit einem Eingeben des Schönungsmittels Gelatine direkt in den Separierraum einer Dekantertrommel die Klärung um 50% oder mehr, abhängig von der Leistung, optimiert werden.

## Patentansprüche

1. Verfahren zur Klärung eines Gelägers, insbesondere eines Weingelägers (101, 201), in einer Anlage mit einer Vollmantel-Schneckenzentrifuge (8, 18), zum zentrifugalen Klären (105, 205) des Gelägers (101, 201) unter Bildung einer Feststoffphase (106, 206) und einer Flüssigkeitsphase (107, 207), **dadurch gekennzeichnet, dass** vor und/oder während des zentrifugalen Klärens (105, 205) ein Schönen (103, 203) des Gelägers (101, 201) durch Zugabe zumindest eines Schönungsmittels (104, 204) erfolgt.

2. Verfahren nach Anspruch 1, **dadurch gekennzeichnet, dass** das Schönen (103, 203) des Gelägers (101, 201) in einem kontinuierlichen Verfahren durchgeführt wird.

3. Verfahren nach Anspruch 1 oder 2, **dadurch gekennzeichnet, dass** das Schönen (103, 203) des Gelägers (101, 201) durch Mischen des Gelägers (101, 201) und des Schönungsmittels (104, 204) erfolgt.

4. Verfahren nach einem der vorhergehenden Ansprüchen, **dadurch gekennzeichnet, dass** das Schönen (103, 203) zumindest die Zugabe eines Gelatine-Kieselsols umfasst.

5. Verfahren nach Anspruch 3 oder 4, **dadurch gekennzeichnet, dass** das Schönen (103, 203) bei einer Produkttemperatur von 8-25°C durchgeführt wird.

6. Verfahren nach Anspruch 4 oder 5, **dadurch gekennzeichnet, dass** zunächst die Zugabe von Gelatine und anschließend die Zugabe von Kieselsol erfolgt.

7. Verfahren nach einem der vorhergehenden Ansprüche, **dadurch gekennzeichnet, dass** nach dem Schönen (103, 203) ein Ermitteln des Trubgehaltes (208) in der Flüssigkeitsphase (107, 207) oder in einem teilgeklärten Geläger erfolgt.

8. Verfahren nach einem der vorhergehenden Ansprüche, **dadurch gekennzeichnet, dass** das Schönen (103) in einer Mischsektion (5) vor dem zentrifugalen Klären (105) in der Zentrifuge erfolgt.

9. Verfahren nach einem der vorhergehenden Ansprüche, **dadurch gekennzeichnet, dass** das Schönen (203) durch Zuleitung des Schönungsmittels (204) in die Vollmantel-Schneckenzentrifuge (18) während des zentrifugalen Klärens (205) erfolgt.

10. Verfahren nach einem der vorhergehenden Ansprüche, **dadurch gekennzeichnet, dass** anhand des Trubgehaltes (208) der Flüssigphase (107, 207) oder des teilgeklärten Gelägers eine Dosierung des Schönungsmittels (104, 204, 304) erfolgt.

11. Verfahren nach einem der vorhergehenden Ansprüche, **dadurch gekennzeichnet, dass** anhand des Trubgehaltes (208) der Flüssigphase (107, 207) oder des teilgeklärten Gelägers eine Regelung der Vollmantel-Schneckenzentrifuge (104, 204, 304) erfolgt.

## Claims

1. A method for clarifying a sediment, especially a wine sediment (101, 201), in an installation with a solid-wall worm centrifuge (8, 18) for the centrifugal clarification (105, 205) of the sediment (101, 201) by forming a solid phase (106, 206) and a liquid phase (107, 207), **characterized in that** fining (103, 203) of the sediment (101, 201) occurs by addition of at least one fining agent (104, 204) before and/or during the centrifugal clarification (105, 205).

2. A method according to claim 1, **characterized in that** the fining (103, 203) of the sediment (101, 201) is performed in a continuous process.

3. A method according to claim 1 or 2, **characterized in that** the fining (103, 203) of the sediment (101, 201) occurs by mixing of the sediment (101, 201) and the fining agent (104, 204).

4. A method according to one of the preceding claims, **characterized in that** the fining (103, 203) comprises at least the addition of a gelatin-silica sol.

5. A method according to claim 3 or 4, **characterized in that** the fining (103, 203) is performed at a product temperature of 8 to 25°C.

6. A method according to claim 4 or 5, **characterized in that** the addition of gelatin occurs first and the addition of silica sol subsequently.

7. A method according to one of the preceding claims, **characterized in that** after the fining (103, 203) a determination of the sludge content (208) occurs in the liquid phase (107, 207) or in a partly clarified sediment.

8. A method according to one of the preceding claims, **characterized in that** the fining (103) occurs in a mixing section (5) before the centrifugal clarification (105) in the centrifuge.

9. A method according to one of the preceding claims, **characterized in that** the fining (203) occurs by feeding the fining agent (204) to the solid-wall worm centrifuge (18) during centrifugal clarification (205).

10. A method according to one of the preceding claims, **characterized in that** dosing of the fining agent (104, 204, 304) occurs on the basis of the sludge content (208) of the liquid phase (107, 207) or the partly clarified sediment.

11. A method according to one of the preceding claims, **characterized in that** a control of the solid-wall worm centrifuge (104, 204, 304) occurs on the basis of the sludge content (208) of the liquid phase (107, 207) or the partly clarified sediment.

## Revendications

1. Procédé de clarification d'un dépôt, en particulier, d'un dépôt de vin (101, 201) dans une installation comportant une centrifugeuse à vis à bol plein (8, 18), pour la clarification par centrifugation (105, 205) du dépôt (101, 201) en formant une phase solide (106, 206) et une phase liquide (107, 207), **caractérisé en ce que**, avant et/ou pendant la clarification par centrifugation (105, 205), un collage (103, 203) du dépôt (101, 201) s'effectue par addition d'au moins un agent de collage (104, 204).

2. Procédé selon la revendication 1, **caractérisé en ce que** le collage (103, 203) du dépôt (101, 201) est réalisé dans un procédé continu.

3. Procédé selon la revendication 1 ou 2, **caractérisé en ce que** le collage (103, 203) du dépôt (101, 201) s'effectue par mélange du dépôt (101, 201) et de l'agent de collage (104, 204).

4. Procédé selon l'une des revendications précédentes, **caractérisé en ce que** le collage (103, 203) comprend au moins l'addition de gélatine-sol de silice.

5. Procédé selon la revendication 3 ou 4, **caractérisé en ce que** le collage (103, 203) est réalisé à une température de produit de 8 à 25 °C.

6. Procédé selon la revendication 4 ou 5, **caractérisé en ce que** l'on effectue tout d'abord l'addition de gélatine et ensuite, l'addition de sol de silice.

7. Procédé selon l'une des revendications précédentes, **caractérisé en ce que**, après le collage (103, 203), on effectue une détermination du niveau de trouble (208) dans la phase liquide (107, 207) ou dans un dépôt partiellement clarifié.

8. Procédé selon l'une des revendications précédentes, **caractérisé en ce que** le collage (103) s'effectue dans une section de mélange (5) avant la clarification par centrifugation (105) dans la centrifugeuse.

9. Procédé selon l'une des revendications précédentes, **caractérisé en ce que** le collage (203) s'effectue par acheminement de l'agent de collage (204) dans la centrifugeuse à vis à bol plein (18) pendant la clarification par centrifugation (205).

10. Procédé selon l'une des revendications précédentes, **caractérisé en ce que**, sur la base du niveau de trouble (208) de la phase liquide (107, 207) ou du dépôt partiellement clarifié, on effectue un dosage de l'agent de collage (104, 204, 304).

11. Procédé selon l'une des revendications précédentes, **caractérisé en ce que**, sur la base du niveau de trouble (208) de la phase liquide (107, 207) ou du dépôt partiellement clarifié, une régulation de la centrifugeuse à vis à bol plein (104, 204, 304) s'effectue.
